# EUROPEAN PATENT SPECIFICATION

(11) **EP 1 653 216 B1**
(45) Date of publication and mention of the grant of the patent: **25.11.2009**
(21) Application number: 05109921.6
(22) Date of filing: 24.10.2005
(51) Int. Cl.: G01N 21/03, B01L 3/00, G02B 6/02

(54) **Microfluidic device**
Mikrofluidische Vorrichtung
Dispositif microfluidique

(30) Priority: 26.10.2004 SE 0402609
(43) Date of publication of application: 03.05.2006
(73) Proprietor: Acreo AB, 164 40 Kista (SE)
(72) Inventor: Claesson, Åsa, SE-116 69, STOCKHOLM (SE); Enström, Anders, SE-112 60, STOCKHOLM (SE); Margulis, Walter, SE-141 60, HUDDINGE (SE)
(74) Representative: Pierrou, Mattias

(56) References cited:
- WO-A-2004/001465
- WO-A-2004/016948
- US-A1- 2003 152 308
- US-B1- 6 343 174
- RITARI T ET AL: "Gas sensing using air-guiding photonic bandgap fibers" OPTICS EXPRESS OPT. SOC. AMERICA USA, vol. 12, no. 17, 23 August 2004 (2004-08-23), XP002373024 ISSN: 1094-4087
- SINGH H ET AL: "Simultaneously measuring temperature and strain using optical fiber microcavities" JOURNAL OF LIGHTWAVE TECHNOLOGY IEEE USA, vol. 15, no. 4, April 1997 (1997-04), pages 647-653, XP002373025 ISSN: 0733-8724

## Description

### Technical field

The present invention relates to a microfluidic device, particularly for use in optical analysis of a liquid or gaseous medium.

### Technical background

In the last decade, with the development of genomics and electrophoresis, silica capillaries have been used in analyzing liquid substances such as organic material, for application in DNA sequencing and other areas. In a manner similar to optical analysis in lab-on-a-chip, micro-fluidics in capillaries and fibers is still a subject in its infancy, but is bound to grow and develop rapidly in the coming years. In this latter case, light is made to interact with liquid material contained or flowing inside the capillaries. The optical excitation of the liquid material by laser light is generally done transversally, i.e. with the light impinging upon the capillary from the side. In many cases, it would be desirable to excite an extended region of the liquid (for example up to 30 cm long region), but this is difficult in a configuration with transverse illumination.

One natural step would then be to attempt to illuminate the liquid under examination in a longitudinal configuration, i.e. where the illumination light travels along the capillary. However, one serious limitation associated with longitudinal, or axial, illumination is the interface of the liquid. At any open end in the capillary, the liquid forms a meniscus, causing a lens effect. In addition, the exposure of the liquid under examination to ambient conditions such as air is often undesirable for stability reasons, and for chemical and/or biological reasons. Thus, it is typically desired to contain the liquid in a closed environment. For this reason, bulk cells or containers have been used at the entrance and at the exit of the capillary, wherein an optical window is provided to handle the optical coupling into the capillary.

US 2003/0952308 discloses a capillary waveguide fluorescence sensor comprising a capillary, and an optical fiber and a fluid injection port connected to the capillary by means of an optical/fluid connector attached to the capillary by threaded couplings.

US 6,343,174 discloses a medical laser delivery system that incorporates fluid delivery channels within the optical fiber structure so as to bring fluids directly to the site of laser power delivery.

WO 2004/016948 discloses a micro pumping system in which a light source is used for irradiating a liquid such that vapour bubbles are formed acting on the liquid.

WO 2004/001465 discloses a sensor comprising a waveguide having a hollow core region extending through a cladding region, the cladding region comprising a matrix material having a first refractive index and, formed in the matrix material, a plurality of elongate, longitudinal holes surrounding the core region, the waveguide providing, at a sensing and/or excitation wavelength of light, an effective refractive index in the cladding region that is lower than the refractive index of an analyte to be tested such that the waveguide is index guiding with the analyte in the core region.

T. Ritari et al., "Gas sensing using air-guiding photonic bandgap fibers", Optics Express, Vol. 12, No.17, discloses the use of an air-guiding photonic bandgap fiber for gas sensing. The bandgap fiber is spliced to a standard single-mode fiber at the input end and filled with gas through the other end placed in a vacuum chamber.

Unfortunately, the bulky and often leaky arrangements of the above kind take away one of the main advantages of employing capillaries for the analysis, namely the possibility of using minute volumes of the liquid under investigation.

Thus, there is a general problem in the prior art regarding how to efficiently couple the illumination light longitudinally into a capillary for optical analysis of a liquid contained therein.

### Summary of the invention

One object of the present invention is therefore to provide for a way of coupling illumination light longitudinally into a fluid contained in a capillary.

It is known since long how to fabricate optical fibers having one or more longitudinal holes (fluid channels) running alongside the core of the fiber. In the prior art, such fibers have been used, for example, as pressure sensors.

Both in capillaries and in optical fibers with longitudinal holes, it would be desirable to have the possibility to couple light in a straight line from the fiber and into and through the fluid channel of the capillary without the formation of a meniscus, and at the same time keep the liquid under analysis in an enclosed environment.

The present invention solves this problem by providing a microfluidic device according to the appended claims.

One competitive advantage of the present invention compared to previous technology in this field is that standard telecom techniques for splicing fibers can be used for joining the optical fiber to the capillary.

The inventive microfluidic device is envisaged to find applications in various fields, including both photonics and bio-sciences.

Hence, the microfluidic device according to the present invention eliminates the requirement to use bulky fluid cells to allow the coupling of light into and out from capillaries and photonic fibers, while still keeping the fluid under analysis in an enclosed and protected environment. At the same time, the present invention provides for easy transport of fluid into and out from the capillary.

According to the invention, it is possible to control the flow of liquid through the device by using transversally incident light. The liquid in a selected one of the longitudinal holes of the fiber is then made to expand, such that liquid from this particular hole is effectively pumped into the fluid channel of the capillary. By alternatingly illuminating the liquid in the two holes of the fiber, liquid can be selectively introduced into the capillary. Similarly, when a multiple-hole output fiber is employed, liquid can be selectively pumped from the capillary and into the desired hole of the output fiber.

If none of the holes of the input fiber is illuminated, liquid from all these holes will be pumped into the capillary and mix therein. However, if one of the holes is illuminated, liquid from just one of the holes may be pumped into the capillary. Considering the small diameter of the fluid channel of the capillary, two different liquids can be selectively pumped into the capillary from the two holes without mixing. (It should be noted that for a microfluidic device, the flow inside a fluid channel is primarily laminar.) This is, as described above, achieved by selectively illuminating the holes one at the time. In principle, this selective transverse illumination of the liquid in the holes works as an optical valve.

At the output side, this kind of optical valve can be used for sorting out various portions of the sample within the fluid channel of the capillary into different holes in the output fiber. For example, this may be utilized for sorting particles, such as cells or the like, into different output holes depending on some selection criterion (e.g. dye marking or luminescence tags).

In embodiments where an extended fluid channel is desired in the capillary, means may be provided to contain light along the capillary.

One way of containing light within the capillary may be to provide a reflective coating on the inner wall of the fluid channel of the capillary, thus preventing light from escaping.

Another suitable way of containing light in the capillary is to employ a photonic bandgap fiber (PBF) or a liquid-core, holey fiber for the capillary. In a PBF, light is guided in a low index region surrounded by a periodic structure. Due to the periodic structure, light is effectively prevented from leaving the guiding core. Similar to a standard capillary tubing, a fluid may be injected into the light guiding core of a PBF, and at the same time light launched into the PBF will be contained therein due to the photonic structure of the PBF. In a liquid-core, holey fiber light can be contained in the core despite that the liquid-core may have a lower refractive index than the material of the cladding (capillary). This is achieved by providing a number of small holes (thus "holey fiber") close to the core, thus reducing the effective refractive index of the cladding.

Although this specification is primarily directed towards examples in which a fluid in the form of a liquid is employed, it should be understood that the device according to the invention may also be applied in cases where the fluid is a gaseous medium.

### Brief description of the drawings

The various aspects of the invention, including its particular features and advantages, will be readily understood from the following detailed description and the accompanying drawings. On the drawings:
Figure 1 schematically shows a device according to the present invention;
Figure 2 schematically shows another device according to the invention;
Figure 3 shows a picture of a typical twin-hole optical fiber used in embodiments of the present invention.

### Detailed description of the invention

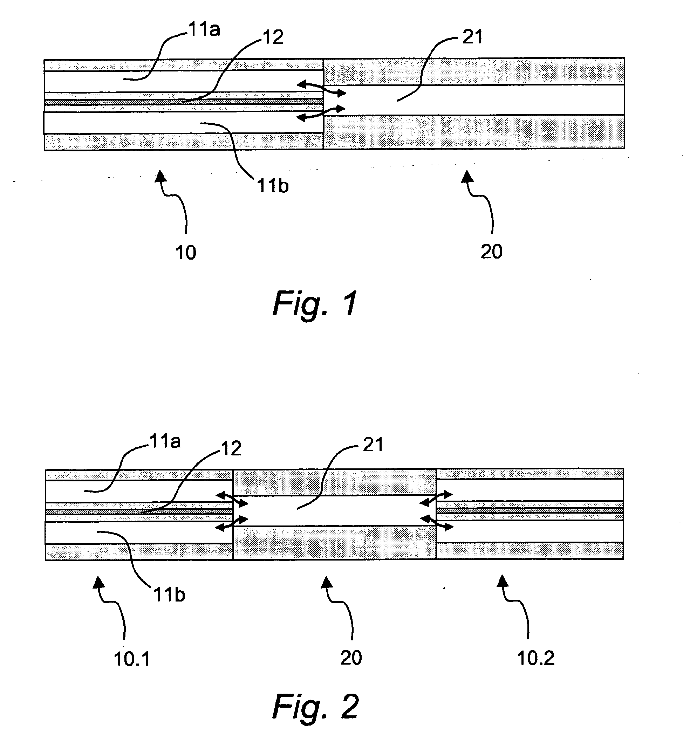

The invention will be further explained in the following with reference to a device comprising an input optical fiber 10 with two longitudinal holes (fluid channels) 11a and 11b parallel and adjacent the core 12 of the fiber. The twin-hole fiber is spliced to a capillary 20 (such as a capillary tubing, a photonic bandgap fiber or a liquid-core, holey fiber), preferably of substantially the same outer diameter as the fiber. The arrangement of the optical fiber 10 (and its holes 11a, 11b) and the capillary 20 is such that there is a capability of fluid communication between each of the holes 11a, 11b and the fluid channel 21 of the capillary (indicated by double-head arrows in figures 1 and 2). In addition, the center of the core 12 of the fiber 10 is axially aligned with at least some portion of the capillary fluid channel 21. Consequently, light can be conveniently coupled from the optical fiber and into the fluid channel of the capillary in a longitudinal, or axial, configuration. Since there is fluid communication between the holes of the fiber and the fluid channel of the capillary, liquid can be likewise conveniently injected into the fluid channel of the capillary. A device of this kind is schematically shown in figure 1 of the drawings.

The device is preferably manufactured by joining the optical fiber 10 and the capillary 20 by means of a standard fiber splicer. For example, in the experiments carried out relating to this invention, a fusion splicer of the make Ericsson FSU 975 PM-A was used. When making the splice, a current lower than that typically used when splicing standard fibers should preferably be used. The reason for using a lower splicing current in the splicer is that thermal collapse of the fluid channels should be avoided.

In a first embodiment, a twin-hole optical fiber 10 was used in connection with a capillary tubing 20. The outer cladding diameter of the optical fiber was about 125 µm. Each fluid channel 11a, 11b of the fiber had a diameter of about 25 µm and a centre to centre separation of about 50 µm. This fiber was spliced to a capillary 20 having similar outer diameter, and a capillary fluid channel 21 The capillary fluid channel overlapped by margin with both of the fluid channels in the optical fiber, such that there was a capability of fluid communication between the fluid channels of the optical fiber and the capillary tubing. The light guiding core of the optical fiber, having a diameter of about 8 µm, was situated approximately midway, symmetrically between the two fluid channels of the fiber. When the fiber and the capillary had been joined by fusion splicing, the light guiding core was thus axially aligned with the fluid channel of the capillary tubing, such that light could conveniently pass between the light guiding core and the fluid channel of the capillary. Liquid could flow between the fiber holes 11a, 11b and the capillary fluid channel 21 without any formation of bubbles.

In a second embodiment, smaller dimensions were used. Also in this case, the capillary fluid channel overlapped by margin with both of the fluid channels in the optical fiber, such that there was a capability of fluid communication between the fluid channels of the optical fiber and the capillary tubing.

Another embodiment is shown in figure 2. At an output end of the capillary, there is preferably arranged a second optical fiber 10.2 in the form of an output fiber in addition to the first optical fiber 10.1, spliced to the capillary 20 in a manner similar to the situation for the first, input fiber. Hence, light and liquid from the fluid channel of the capillary can be collected at the output fiber for further processing and analysis.

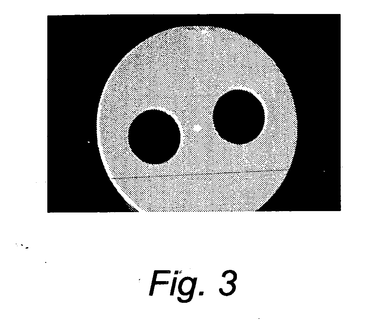

Figure 3 shows a picture of a twin-hole optical fiber that may be used in the device according to the present invention. The two holes (fluid channels) can be seen symmetrically arranged adjacent the light guiding core of the fiber.

Since the light and fluid transport system is based on well known fiber technology, any known principle or device may be used in the analysis of the output light. For example, reflective fiber gratings may be used for selectively separating illumination light from fluorescence light emanating from the fiber.

The capillary can be of virtually any length. However, if very long capillaries are to be used together with a fluid having a refractive index lower than the material of the capillary (e.g. silica, having a refractive index of about 1.45), the inner walls of the fluid channel may be coated with a reflective material, such that light guiding is effected along the capillary in order to reduce loss of light in the process of analysis. Alternatively, when a photonic bandgap fiber or a liquid-core holey fiber is used for the capillary, such reflective coating can be dispensed with since light may be contained in the capillary by the light guiding properties of such fiber itself. This latter alternative has the advantage of lower optical losses compared to the case where a reflective coating is used inside a capillary tubing. Optionally, gradient index lenses (GRIN-lenses) may also be provided at the interface between the optical fiber and the capillary in order to improve the axial coupling of light in to and out from the capillary, thus also providing for a more collimated light beam through the capillary.

One advantageous feature of the device according to the present invention is that the flow of liquid within the microfluidic device can be controlled optically. Generally, by focusing a high power laser beam onto a capillary, thermal expansion of the liquid inside the capillary can be used in order to intermittently halt or allow the flow of liquid. The following description presupposes that there is a bias pressure applied to the microfluidic system driving liquid through the fluid channels of the device.

Initially, the flow within the capillary is essentially continuous due to the bias pressure applied. When a laser beam is focused onto the capillary, the illuminated portion of the liquid exhibits thermal expansion effected by the energy deposited by the laser beam. This thermal expansion (in two directions along the capillary) gives a quick push of the liquid at the edge of the heated region in the forward direction, and stops the flow on the opposite side of the heated region thus counteracting the bias pressure applied. When the laser light is switched off, the opposite takes place, wherein the liquid decreases in volume due to the reduced temperature, causing a quick stop of the flow in the forward direction. This principle can be used for controlling the flow of liquid from the two (or more) fluid channels of the optical fiber into the fluid channel of the capillary, or vice versa.

To test this principle of optical flow control, a device according to the present invention was used wherein liquids of different color were injected into the two fluid channels of the optical fiber. A bias pressure was applied to the device, such that the same flow rate was obtained from the two channels of the optical fiber into the fluid channel of the capillary, thus mixing the liquids at the junction between the channels. Two laser beams were directed onto the optical fiber, one at each fluid channel therein. The two laser beams were synchronized such that one was switched on when the other was switched off, and vice versa. This setup resulted in alternating injection of liquid from the fluid channels of the fiber one at the time, which gave a situation where the liquid inside the fluid channel of the capillary contained discrete portions of differently colored liquids. It should be noted that the dimensions of the capillary are sufficiently small in order for the injected liquid to remain substantially unmixed in the axial direction.

Perhaps more interestingly, the same principle can be used for selectively sending the contents of the capillary fluid channel into either of two fluid channels in an output optical fiber. For example, particles such as cells flowing in a liquid medium and being marked by fluorescence may be directed into a selected channel of the output fiber depending on, for example, whether a particular tag is detected or not.

Notably, the power and switching periodicity of the illuminating laser beams should be tuned with respect to the bias pressure such that the desired flow control is obtained. If the bias pressure is too high compared to the thermally induced change in flow rate, the flow of liquid will not come to a complete stop during switching, thus resulting in remaining mixture of the two liquids (or poor separation as the case may be).

### Conclusion

A microfluidic device has been disclosed, comprising an optical fiber having a light guiding core and at least one fiber fluid channel formed adjacent to the core, and a capillary having a capillary fluid channel. The optical fiber and the capillary are spliced to each other such that the center of the light guiding core of the fiber is axially aligned with the capillary fluid channel, while at the same time there is provided a fluid communication between the fiber fluid channels and the capillary fluid channel.

Thus, a convenient and competitive microfluidic device is provided, in which fluid and light may be introduced axially into a capillary fluid channel. The device can be manufactured by the use of standard splicing techniques, thus making it less costly than prior art devices. In addition, problems in the prior art relating to comparatively large volumes involved, and to the issue of interfacing the fluid under analysis, are avoided. The device according to the invention also provide for optical flow control of a liquid inside the fluid channels, thus facilitating the handling of the liquid and selective sorting of samples.

The embodiments described above and shown schematically on the drawings are for illustrative purposes only. Hence, it will be understood that various modifications are possible within the scope defined in the claims.

## Claims

1. A microfluidic device, comprising:
a first optical fiber (10) having a light guiding core (12) and
a capillary (20) having a capillary fluid channel (21);
wherein the first optical fiber and the capillary are spliced to each other such that the center of the light guiding core of said fiber is axially aligned with at least some portion of the capillary fluid channel of the capillary; **characterized by** at least one fiber fluid channel (11) formed adjacent to the core, and in that
said first optical fiber and said capillary are arranged to provide fluid communication between the or each fluid channel of said fiber and the fluid channel of the capillary.

2. The device as claimed in claim 1, wherein said optical fiber comprises two or more fiber fluid channels (11a, 11b) each being capable of fluid communication with the capillary fluid channel (21) of the capillary (20).

3. The device as claimed in claim 1 or 2, further comprising a second optical fiber having a light guiding core and at least one fiber fluid channel formed adjacent to the core;
wherein said second optical fiber and said capillary are joined to each other such that the center of the light guiding core of said second optical fiber is axially aligned with at least some portion of the fluid channel of the capillary; and
wherein said second optical fiber and said capillary are arranged to provide fluid communication between the or each fluid channel of said second fiber and the fluid channel of said capillary.

4. The device as claimed in any one of the claims 1-3, wherein the fiber fluid channel of the or each optical fiber is constituted by a respective longitudinal hole in the respective fiber, said longitudinal hole running adjacent and parallel to its light guiding core.

5. The device as claimed in claim 3, wherein the center of the light guiding core of both optical fibers and the center of the fluid channel of the capillary are all axially aligned along a common axis.

6. The device as claimed in claim 2, further comprising means for altering the temperature of liquid in a selected one of said fiber fluid channels and to thereby control the flow of liquid from said selected fiber fluid channel into the capillary fluid channel of the capillary.

7. The device as claimed in claim 6, wherein the means for altering the temperature comprises a laser source for illumination of the selected one of said channels.

8. The device as claimed in any one of the preceding claims, wherein the or each optical fiber and the capillary have substantially the same diameters, and wherein the or each fiber is joined to the capillary by fusion splicing.

9. The device as claimed in any one of the preceding claims, wherein the capillary is a photonic bandgap fiber or a liquid-core, holey fiber.

10. The device as claimed in any one of the preceding claims, wherein the inside of the capillary fluid channel is provided with a reflective coating.

## Patentansprüche

1. Mikrofluidische Vorrichtung, enthaltend:
eine erste Lichtleitfaser (10), die einen Lichtleitkern (12) hat, und
eine Kapillare (20), die über einen Kapillarfluidkanal (21) verfügt;
wobei die erste Lichtleitfaser und die Kapillare derart miteinander verspleißt sind, dass das Zentrum des Lichtleitkerns der Faser axial mit wenigstens einem Abschnitt des Kapillarfluidkanals der Kapillare ausgerichtet ist;
**dadurch gekennzeichnet, dass** wenigstens ein Faserfluidkanal (11) benachbart dem Kern ausgebildet ist, und dadurch, dass die erste Lichtleitfaser und die Kapillare so angeordnet sind, dass sie eine Fluidverbindung zwischen dem oder jedem Fluidkanal der Faser und dem Fluidkanal der Kapillare herstellen.

2. Vorrichtung nach Anspruch 1, bei der die Lichtleitfaser wenigstens zwei Faserfluidkanäle (11 a, 11 b) enthält, die jeweils zu einer Fluidverbindung mit dem Kapillarfluidkanal (21) der Kapillare (20) in der Lage sind.

3. Vorrichtung nach Anspruch 1 oder 2, weiterhin enthaltend eine zweite Lichtleitfaser, die einen Lichtleitkern und wenigstens einen Faserfluidkanal enthält, der benachbart des Kerns ausgebildet ist;
wobei die zweite Lichtleitfaser und die Kapillare miteinander derart verbunden sind, dass das Zentrum des Lichtleitkerns der zweiten Lichtleitfaser axial mit wenigstens einem Abschnitt des Fluidkanals der Kapillare ausgerichtet ist; und
wobei die zweite Lichtleitfaser sowie die Kapillare so angeordnet sind, dass sie eine Fluidverbindung zwischen dem oder jedem Fluidkanal der zweiten Faser und dem Fluidkanal der Kapillare herstellen.

4. Vorrichtung nach einem der Ansprüche 1 bis 3, bei der der Faserfluidkanal der oder jeder Lichtleitfaser durch ein jeweiliges längliches Loch in der entsprechenden Faser ausgebildet ist, wobei das längliche Loch benachbart und parallel zu seinem Lichtleitkern verläuft.

5. Vorrichtung nach Anspruch 3, bei der das Zentrum des Lichtleitkerns beider Lichtleitfasern und das Zentrum des Fluidkanals der Kapillare allesamt axial entlang einer gemeinsamen Achse ausgerichtet sind.

6. Vorrichtung nach Anspruch 2, weiterhin enthaltend eine Einrichtung zum Ändern der Temperatur einer Flüssigkeit in einem gewählten der Faserfluidkanäle, um dadurch den Fluss der Flüssigkeit von dem gewählten Faserfluidkanal in den Kapillarfluidkanal der Kapillare zu steuern.

7. Vorrichtung nach Anspruch 6, bei der die Einrichtung zum Ändern der Temperatur eine Laserquelle zum Beleuchten des gewählten der Kanäle enthält.

8. Vorrichtung nach einem der vorhergehenden Ansprüche, bei der die oder jede Lichtleitfaser und die Kapillare im wesentlichen denselben Durchmesser haben und die oder jede Faser mit der Kapillare durch Fusionsspleißen verbunden ist.

9. Vorrichtung nach einem der vorhergehenden Ansprüche, bei der die Kapillare eine fotonische Bandlückenfaser oder eine löchrige Flüssigkernfaser ist.

10. Vorrichtung nach einem der vorhergehenden Ansprüche, bei der die Innenseite des Kapillarfluidkanals mit einer reflektierenden Beschichtung überzogen ist.

## Revendications

1. Dispositif microfluidique, comprenant :
une première fibre optique (10) comportant un coeur (12) de guidage de la lumière et un capillaire (20) comportant un canal de fluide de capillaire (21) ;
la première fibre optique et le capillaire étant épissés entre eux de façon telle que le centre du coeur de guidage de lumière de ladite fibre est aligné axialement avec au moins une certaine partie du canal de fluide du capillaire ; **caractérisé par** au moins un canal de fluide de fibre (11), formé de manière adjacente au coeur, et en ce que
ladite première fibre optique et ledit capillaire sont agencés pour assurer une communication fluidique entre le ou chaque canal de fluide de ladite fibre et le canal de fluide du capillaire.

2. Dispositif selon la revendication 1, dans lequel ladite fibre optique comprend deux ou plusieurs canaux de fluide de fibre (11a, 11b), chacun étant apte à une communication fluidique avec le canal de fluide (21) du capillaire (20).

3. Dispositif selon la revendication 1 ou 2, comprenant, en outre, une seconde fibre optique comportant un coeur de guidage de la lumière et au moins un canal de fluide de fibre, formé de manière adjacente au coeur ;
ladite seconde fibre optique et ledit capillaire étant reliés entre eux de façon telle que le centre du coeur de guidage de lumière de ladite seconde fibre optique est aligné axialement avec au moins une certaine partie du canal de fluide du capillaire ; et
ladite seconde fibre optique et ledit capillaire étant agencés pour assurer une communication fluidique entre le ou chaque canal de fluide de ladite seconde fibre et le canal de fluide dudit capillaire.

4. Dispositif selon l'une quelconque des revendications 1 à 3, dans lequel le canal de fluide de fibre de la ou de chaque fibre optique est constitué d'un trou longitudinal respectif dans la fibre respective, ledit trou longitudinal s'étendant de manière adjacente et parallèle à son coeur de guidage de la lumière.

5. Dispositif selon la revendication 3, dans lequel le centre du coeur de guidage de lumière des deux fibres optiques et le centre du canal de fluide du capillaire sont tous alignés axialement le long d'un axe commun.

6. Dispositif selon la revendication 2, comprenant, en outre, un moyen pour modifier la température du liquide dans l'un sélectionné desdits canaux de fluide de fibre et ainsi commander le débit de liquide depuis ledit canal de fluide de fibre sélectionné jusque dans le canal de fluide du capillaire.

7. Dispositif selon la revendication 6, dans lequel le moyen pour modifier la température comprend une source laser pour illumination de l'un sélectionné desdits canaux.

8. Dispositif selon l'une quelconque des revendications précédentes, dans lequel la ou chaque fibre optique et le capillaire sont sensiblement de même diamètre, et dans lequel la ou chaque fibre est reliée au capillaire par épissure par fusion.

9. Dispositif selon l'une quelconque des revendications précédentes, dans lequel le capillaire est une fibre à bande interdite photonique ou une fibre à trous à coeur liquide.

10. Dispositif selon l'une quelconque des revendications précédentes, dans lequel l'intérieur du canal de fluide de capillaire est pourvu d'un revêtement réfléchissant.
